# EUROPEAN PATENT APPLICATION

(11) **EP 1 643 780 A1**
(43) Date of publication of application: **05.04.2006**
(21) Application number: 05255913.5
(22) Date of filing: 22.09.2005
(51) Int. Cl.: H04Q 7/28

(54) **Method and apparatus for reducing latency in a push-to-talk system**

(30) Priority: 30.09.2004 US 956359
(71) Applicant: LUCENT TECHNOLOGIES INC., Murray Hill, New Jersey 07974-0636 (US)
(72) Inventor: Laha, Subhasis, Aurora IL 60504 (US); Rossetti, David Albert, Randolph NJ 07869 (US); Wang, Jin, Lisle IL 60532 (US)
(74) Representative: Sarup, David Alexander

(57) **Abstract**

In real-time critical wireless data applications, such as Push-to-talk over Cellular (PoC) or Push-To-Talk (PTT) and Voice-over-IP (VoIP), a user of a PTT mobile station pushes a button to indicate his desire to communicate with a pre-defined group (e.g., a buddy list) of people. This action triggers the PTT mobile station to re-activate a dormant data call connection and request the floor. When one or more of the mobile stations identified in the buddy list responds, a PTT server sends a Grant message to the PTT caller and he/she can start to talk. In one embodiment, the Grant message is sent to the PTT caller before the dormant call is completely reactivated to reduce PTT call setup latency.

## Description

### BACKGROUND OF THE INVENTION

### 1. FIELD OF THE INVENTION

This invention relates generally to telecommunications, and, more particularly, wireless communications.

### 2. DESCRIPTION OF THE RELATED ART

Generally, push-to-talk over cellular (PoC) systems provide a one-to-many transmission mode that is similar to a conventional police or fire radio system, which are typically wireless. In an analog system with a single base station, a first user captures the base station by an initial transmission, which is activated by a push-to-talk button. The first user's voice transmission is received by the base station and retransmitted to the other users. The transmission by the first user ends when the first user releases the push-to-talk button. This allows one of the other users to reply to the first user or initiate a new transmission by activating his/her radio with the push-to-talk button. Latency to speak, which is the amount of time before a user may speak after pressing the talk button, is relatively minimal in these types of systems.

In a packet data based PoC system, information is transmitted in packets. Speech is carried in digitized samples within these packets. There are two categories of signaling messages; both are carried in packets. One category of signaling conveys a request for users to join a PoC call, either a new or ongoing call. This category may include negotiation of codecs, IP addresses, UDP ports, and the like. The second category of signaling enables a user to request to speak, and other users to receive an indication to listen. Users use the second category of signaling to arrange volleys of speech back and forth, normally with only one user speaking at a time.

In many wireless systems, a mobile station typically does not have a continuously active over-the-air connection to the wireless network, but rather, periodically connects with the network and exchanges packets. Being continuously connected to the wireless network negatively impacts both the battery lifetime of the mobile station and the utilization of wireless resources relative to other users. Because of this, the wireless network typically releases over-the-air connections to the mobile station after a short idle time following the mobile station's or wireless network's last data bit is sent. This state of releasing all the physical resources while still maintaining the logical link layer connection is known as the dormant state. When the wireless network has-one or more packets to send to the mobile device, it pages and locates the mobile device, and reconnects the mobile. Similarly, if the mobile device has a packet to send, the mobile device signals the wireless network and reconnects itself with the wireless network, which establishes the over-the-air connection, and then the mobile device can send the packet. This reconnection adds significant latency to the transfer of PoC signaling messages between the mobile station and the wireless network via over-the-air connections. Significant indication-to-speak latency to a calling user is a problematic issue in PoC systems. Users may have an urgent need to speak to other users, or significant latency may be viewed as a design flaw.

The present invention is directed to overcoming, or at least reducing, the effects of, one or more of the problems set forth above.

### SUMMARY OF THE INVENTION

In one embodiment of the present invention, a method of communicating a grant message to a mobile station in a push-to-talk system is provided. The method comprises receiving a request from a first mobile station to transmit a message to a second mobile station via a dormant connection, and initiating a reactivation of the dormant connection. The grant message is provided to the first mobile station prior to completion of the reactivation

### BRIEF DESCRIPTION OF THE DRAWINGS

The invention may be understood by reference to the following description taken in conjunction with the accompanying drawings, in which like reference numerals identify like elements, and in which:
Figure 1 illustrates a block diagram of a Packet Data Wireless Network;
Figure 2 illustrates signaling for a call scenario within the Packet Data Wireless Network illustrated in Figure 1; and
Figure 3 illustrates signaling for a call scenario within the Packet Data Wireless Network illustrated in Figure 1.

While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

### DETAILED DESCRIPTION OF SPECIFIC EMBODIMENTS

Illustrative embodiments of the invention are described below. In the interest of clarity, not all features of an actual implementation are described in this specification. It will of course be appreciated that in the development of any such actual embodiment, numerous implementation-specific decisions may be made to achieve the developers' specific goals, such as compliance with system-related, standards-related and business-related constraints, which may vary from one implementation to another. Moreover, it will be appreciated that such a development effort might be complex and time-consuming, but may nevertheless be a routine undertaking for those of ordinary skill in the art having the benefit of this disclosure.

Real-time critical wireless data applications, such as Push-to-talk over Cellular (PoC) or Push-To-Talk (PTT) and Voice-over-IP (VoIP), benefit from short call setup delays. For example, in some applications, an end-to-end latency of 1 second or less may be useful in meeting users' expectations.

In a PoC or PTT application, a user of a PTT mobile station pushes a button to indicate his desire to communicate with a pre-defined group (*e.g.,* a buddy list) of people. This action triggers the PTT mobile station to re-activate a dormant data call connection and request the floor. When one or more of the mobile stations identified in the buddy list responds, a PTT server sends a Grant message to the PTT caller and he/she can start to talk. Generally, the faster the Grant message can be sent to the PTT caller, the sooner the user can start to talk, and thus, the shorter the PTT call setup delay.

In one embodiment of the instant invention, a PTT system with a reduced latency indication-to-speak is provided. Generally, there are three components involved in a decision to provide a calling user with an indication-to-speak. These are: 1) the willingness of the called user or users to accept a PoC call or request to speak from the calling user; 2) the wireless network being able to locate the mobile station; and 3) the wireless network being able to establish a connection or connections, as necessary, to carry PoC signaling and media (speech).

The first item, the willingness of the destination user or users to accept a PoC call, means that the called user has set a parameter in a (presence) server (not shown) in the wireless network that indicates he or she is willing to receive a call and listen to speech transmitted from the calling user. Note that if the PoC call has previously been established, but the called mobile is dormant, then this request represents a continuation of the call and a request to listen to the speech of the calling user. The parameter the called user sets is typically defined by protocol regimes known as "presence." Presence parameters are well known to those of ordinary skill in the art, and consequently are not disclosed in detail herein. Generally, presence parameters are set by the user to define himself or herself as being present relative to some callers and not present relative to others. For purposes of describing the disclosed embodiments of the instant invention, it is hereafter assumed that the user desires to receive PoC calls.

The second item, the wireless network being able to locate the user, means that the wireless network is able to contact the mobile station and the mobile station is able to respond. As such, the mobile station is within radio coverage of the wireless network.

The third item, the wireless network being able to establish a connection, means that the wireless network is able to establish an over-the-air connection or set of connections, as necessary, for the wireless network and the mobile station to exchange PoC messages and media. Generally, but not always, there comes a time before the connection process completes when it is likely that the called user will be able to establish an air traffic channel connection. At the point when such a connection is likely, it would be beneficial to send the indication-to-speak signal to the calling user. Generally, by the time that the indication-to-speak signal is received and the calling user begins talking, the connection process will have completed, reducing the perceived latency. In the mean time, the wireless network and mobile station will be able to establish an over-the-air connection or connections, which are used to exchange PoC signaling and media. In some applications, it may be useful to allow for buffering of at least the initial portion of the packets to account for any unusually long delays in establishing the over-the-air connections.

Unless specifically stated otherwise, or as is apparent from the discussion, terms such as "processing" or "computing" or "calculating" or "determining" or "displaying" or the like, refer to the action and processes of a computer system, a digital data processor, a digital signal processor, an integrated circuit (e.g., an application-specific integrated circuit (ASIC) or a Field Programmable Gate Array (FPGA)), or similar electronic computing device, that manipulates and transforms data represented as physical, electronic quantities within the computer system's registers and memories into other data similarly represented as physical quantities within the computer system's memories or registers or other such information storage, transmission or display devices.

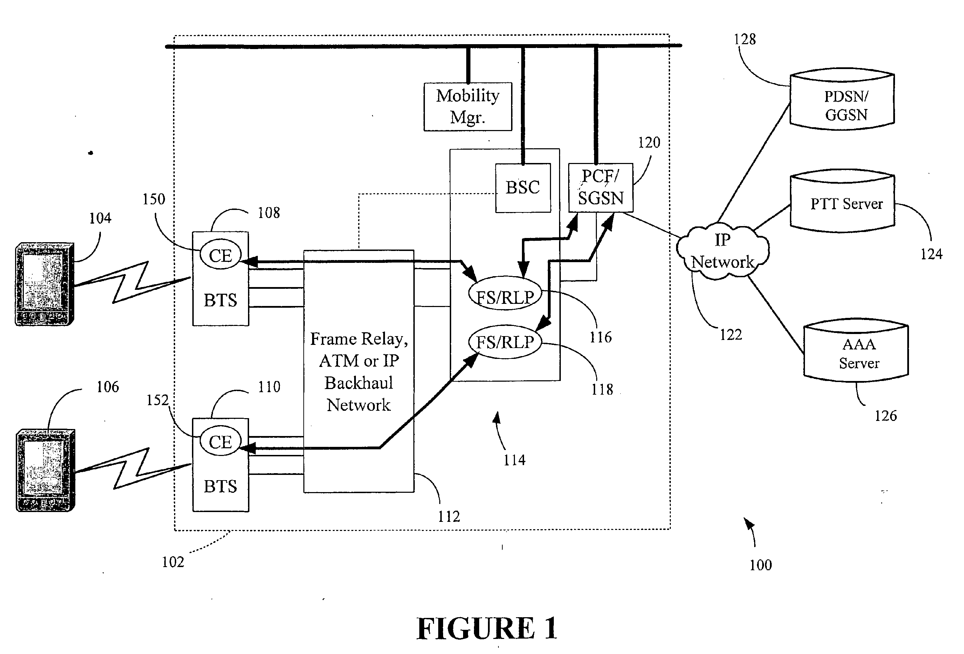

Turning now to the drawings, and specifically referring to Figure 1, a communications system 100 is illustrated, in accordance with one embodiment of the present invention. Figure 1 generally depicts components that that may be used within an exemplary packet data wireless network 102 that supports a PTT or PoC system. One network provider or multiple network service providers may own or service the entire network. The number of service providers does not impact the description of the various embodiments of the instant invention disclosed herein.

The exemplary network 102 may communicate with one or more mobile stations 104, 106 through wireless channels established by one or more base stations (BTS) 108, 110. The BTSs 108, 110 are coupled to a backhaul network 112 (frame relay, ATM or IP backhaul) associated with one or more Radio Network Controllers (RNCs) or Base Station Controllers (BSCs) 114. One or more Frame Selector (FS) or Radio Link Protocol (RLP) elements116, 118 may be coupled to the backhaul network 112 and may function to deliver signals between the BTSs 108, 110 and a Packet Control Function (PCF) or a Serving GPRS Service Node (SGSN) 120, depending on the type of network in which the instant invention is deployed. The PCF/SGSN 120 is coupled to an Internet Protocol (IP) network 122. The IP network 122 is also coupled to a PTT server 124, an Authentication, Authorization and Accounting (AAA) server 124 and a Packet Data Serving Node (PDSN) or a Gateway GPRS Service Node (GGSN), depending on the type of network in which the instant invention is deployed.

Those skilled in the art will appreciate that the mobile device 106 may be served by a separate wireless network similar to the wireless network 102 that serves mobile device 104.

The BTSs 108, 110 functions to provide the mobile stations 104, 106 with radio connections and limited mobility within a limited serving area. Exemplary radio networks may include IS2000, GSM, UMTS, and the like.

A capability of some networks 102 is the ability of the mobile station 104, 106 to establish one or more packet filters that allow the network 102 to recognize certain packets and perform an action upon the recognition of such packets. Packet filters may recognize specific packet types by IP address or address range or port number or port number range, or type of protocol carried in the packet, or differentiated services field, or security Parameter Index (SPI) field, etc., see IS835 and GPRS for more detailed examples. It is possible to specify packet filters that act on inner packet layers for the case of tunneled packet, where a tunneled packet implies that the overall packet carries an inner packet. That inner packet is sometimes said to be "encapsulated." A common use of the packet filters is to recognize certain packets and send them over a particular over-the-air connection that provides a particular quality of service or specialized compression. It is also possible for the network operator to administratively configure packet filters on behalf of the mobile station instead of the mobile station having to actively perform this function. In some situations this is preferable as it simplifies the mobile station design, possibly rendering them less expensive or available sooner.

Generally, there are two categories of signaling messages in a PoC system. Both are carried in packets. One category of signaling requests users to join a PoC call as well as initiates the call. The second category of signaling enables a user to request to speak while other users listen. This second type of signaling provides an arbitration function if two users request to speak generally simultaneously. Because PoC signaling is carried in packets, the filters discussed in the previous paragraph can recognize PoC signaling.

The PTT Server 124 of Figure 1 provides the PTT call control functionality, and performs functions such as expanding nicknames or group names to actual individuals, authenticating and authorizing users to be able to place PTT calls to other PTT users, performing allocation of ports, media duplication or control of media duplication, and other functions. Those skilled in the art will appreciate that the exact arrangement or number of PTT Servers 124 is not central to the instant invention, and may vary widely without departing from the spirit and scope of the instant invention.

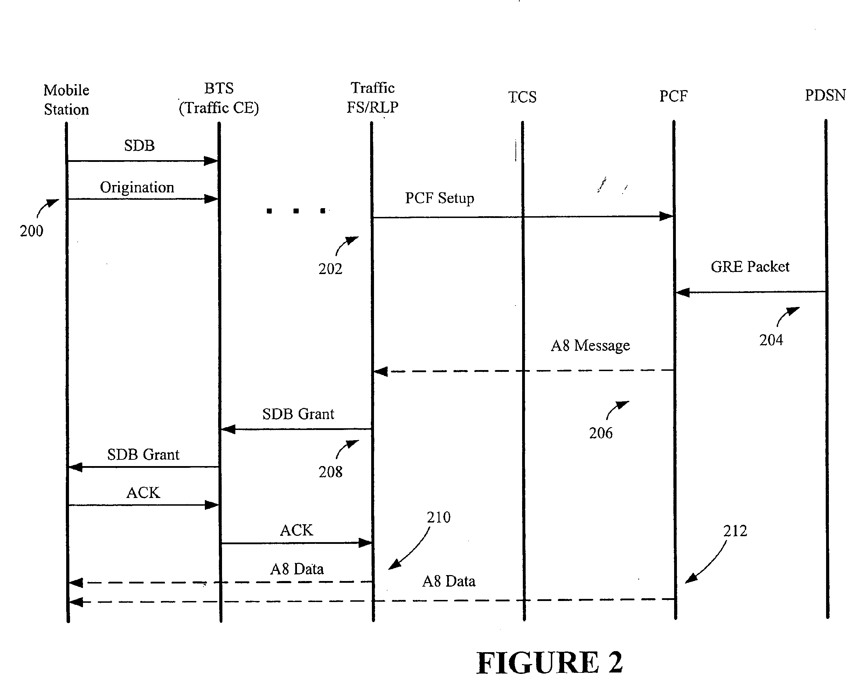

For a more thorough understanding of the instant invention, it may be useful to consider a typical scenario involving an ongoing PTT session in which communications have been established, but have gone dormant, as depicted in Figure 2. In the exemplary situation, a user of the mobile station 104 pushes a button to indicate his desire to again communicate with the pre-defined group of people, such as the user associated with the mobile station 106. This action triggers the mobile station 104 to re-activate the dormant data call connection by sending an Origination message (at 200) to the wireless network 102. This action also triggers the mobile station 104 to request the floor by sending a Short Data Burst (SDB) message (at 200) destined to the PTT server 124. The FS/RLP receives the reactivation request and forwards PCF setup information to the PCF 120 (at 202), which communicates the request to the PTT server 124. The PTT server 124 sends a packet data (Grant) message to the PCF 120, granting the PTT call request (at 204). The PCF 120 determines that it already received the PCF setup request for the mobile station 104, so it sends a message in the form of A8 bearer data (A8 is defined as IS-2001 standards) to the FS/RLP 116 over the bearer transport connection (at 206).

At the time the Grant message arrives at the PCF 120, the dormant call is being reactivated for the mobile device 104, using the Cell Element (CE) 150 allocated in the BTS 108 and the Frame Selector/Radio Link Protocol (FS/RLP) element 116 allocated in the RNC/BSC 114 of the cellular network 102. A bearer transport connection between the CE 150, the FS/RLP element 116, and the PCF 120 is established as part of the data call reactivation. In the meantime, a radio traffic channel connection between the BTS 108, and the mobile station 104 is established. Once both of the backhaul and radio connection setups are complete, the Grant message is sent from the PCF 120 to the mobile station 104 through the FS/RLP element 116 as normal RLP frames.

Typically, however, the setup of the radio traffic channel connection takes longer than the bearer transport connection, for reasons such as negotiation of (optional) air interface parameters and possible timeouts and retransmissions when the air interface quality is suboptimal. Thus, the PCF 120 and the FS/RLP element 116 may not send the Grant message to the mobile station 104 until the ratio traffic channel connection is fully up, lengthening the latency of the PTT call setup.

In one embodiment of the instant invention, however, the FS/RLP element 116 sends the Grant message to the BTS 108 after the bearer transport connection is up but possibly before the traffic channel is connected to the packet data service (at 208). In this case, the FS/RLP element 116 determines that the packet data service connection is not complete, but the setup of the bearer transport connection to the BTS 108 is complete. So the FS/RLP element 116 sends the Grant message to the BTS 108 over the bearer transport connection, without any further delay. The FS/RLP element 116 can determine that the traffic channel is connected to the packet data service when it starts receiving reverse idle frames from the mobile station 104. After the radio traffic channel is acquired (but possibly before the traffic channel is connected to a service), the BTS 108 sends the Grant message as a short data burst (SDB) to the mobile station 104 over the radio traffic connection. Once the mobile station 104 receives the Grant message, it beeps or otherwise indicates to the PTT caller that he/she may start to talk.

In this scenario, any packet data (*e.g.* Voice over IP frames) received from the PTT server 124 is buffered in the FS/RLP element 116. Once the traffic channel is connected to the packet data service for the mobile device 104, the FS/RLP element 116 starts sending any buffered frames to the mobile device 104. Thereafter A8 data containing the voice message from the user of the mobile station 106 is delivered from the PCF 120 to the mobile station 104 (at 212).

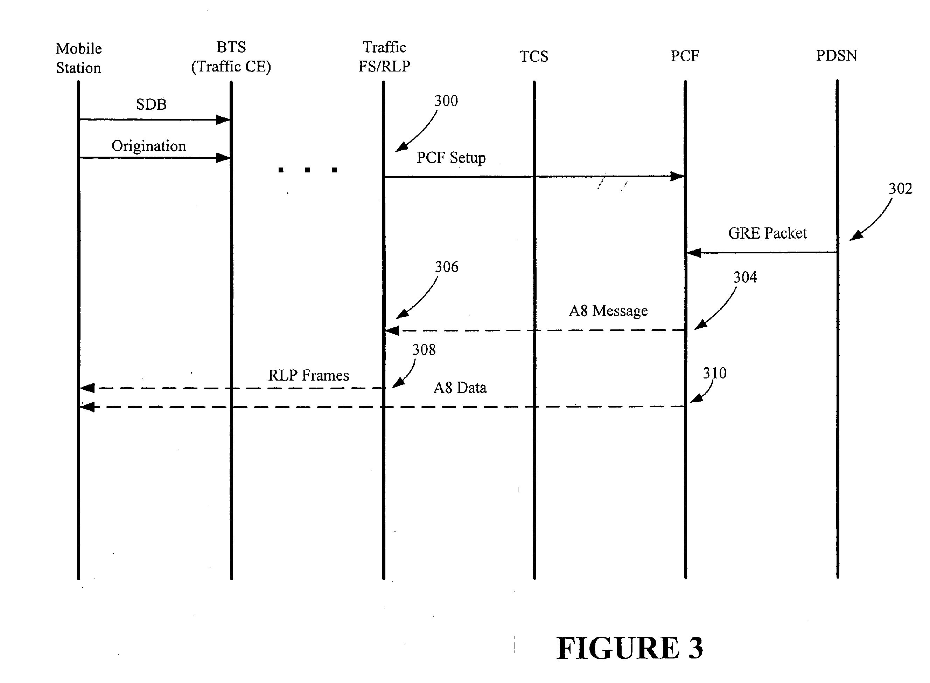

Turning now to Figure 3 in which a second typical scenario involving an ongoing PTT session is illustrated, communications have been established, but unlike the first scenario discussed above when the FS/RLP element receives the Grant message from the PCF 120 (at 306), it determines that the radio traffic channel connection is already up and the traffic channel is connected to the packet data service.

In an exemplary situation, a user of the mobile station 104 pushes a button to indicate his/her desire to again communicate with the pre-defined group of people, such as the user associated with the mobile station 106. The FS/RLP 120 receives the request and forwards the PCF setup message to the PCF 120 (at 300), which communicates the request to the PTT server 124. The PTT server 124 sends the packet data (Grant) message to the PCF 120, granting the PTT call request (at 302). The PCF 120 determines that it already received the PCF setup request for the mobile station 104, so it sends an A8 message to the FS/RLP 116 (at 304).

In this scenario, the FS/RLP element 116 determines that not only the radio traffic channel connection is already up but also the traffic channel is connected to the packet data service when it receives the Grant message from the PCF 120 (at 306). Thus, the FS/RLP 116 sends the Grant message to the mobile station 104 as normal RLP frames (at 308). Thereafter A8 data containing the voice message from the user of the mobile station 104 is delivered from the PCF 120 to the mobile station 106 (at 310).

Those skilled in the art will appreciate that in one embodiment of the instant invention, either of two methods of communicating the Grant message to the mobile stations 104 may be dynamically selected. That is, in a first scenario, the Grant message may be communicated using a faster, new way of sending the Grant message to the mobile stations 104 as a short data burst (SDB), as discussed above with respect to Figure 2. Alternatively, in a second scenario, the Grant message may be communicated as RLP frames, as discussed above with respect to Figure 3. This bifurcated approach helps reduce PTT call setup latency to meet the needs of real-time critical services.

Those skilled in the art will appreciate that the various system layers, routines, or modules illustrated in the various embodiments herein may be executable control units. The control units may include a microprocessor, a microcontroller, a digital signal processor, a processor card (including one or more microprocessors or controllers), or other control or computing devices. The storage devices referred to in this discussion may include one or more machine-readable storage media for storing data and instructions. The storage media may include different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy, removable disks; other magnetic media including tape; and optical media such as compact disks (CDs) or digital video disks (DVDs). Instructions that make up the various software layers, routines, or modules in the various systems may be stored in respective storage devices. The instructions, when executed by a respective control unit, cause the corresponding system to perform programmed acts.

The particular embodiments disclosed above are illustrative only, as the invention may be modified and practiced in different but equivalent manners apparent to those skilled in the art having the benefit of the teachings herein. Furthermore, no limitations are intended to the details of construction or design herein shown, other than as described in the claims below. It is therefore evident that the particular embodiments disclosed above may be altered or modified and all such variations are considered within the scope and spirit of the invention. Accordingly, the protection sought herein is as set forth in the claims below.

## Claims

1. A method of communicating a grant message to a mobile station in a push-to-talk system, the method comprising:
receiving a request from a first mobile station to transmit a message to a second mobile station via a dormant connection;
initiating a reactivation of the dormant connection; and
providing a grant message to the first mobile station prior to completion of the reactivation.

2. A method, as set forth in claim 1, wherein providing the grant message to the first mobile station prior to completion of the reactivation further comprises providing the grant message via a bearer transport connection.

3. A method, as set forth in claim 2, wherein providing the grant message via the bearer transport connection further comprises providing the grant message as a short data burst.

4. A method, as set forth in claim 1, wherein initiating the reactivation of the dormant connection further comprises initiating the reactivation of the dormant connection in response to receiving an origination message.

5. A method, as set forth in claim 4, wherein initiating the reactivation of the dormant connection further comprises a push-to-talk call request being delivered to a push-to-talk server in response to receiving the origination message.

6. A method, as set forth in claim 5, wherein providing a grant message to the first mobile station prior to completion of the reactivation further comprises providing the grant message via a bearer transport connection in response to determining that the reactivation has not completed.

7. A method of controlling a communications session in a push-to-talk system, the method comprising:
transmitting a request to transmit a message to a mobile station via a dormant connection;
initiating a reactivation of the dormant connection; and
receiving a grant message prior to completion of the reactivation.

8. A method, as set forth in claim 7, wherein receiving the grant message prior to completion of the reactivation further comprises receiving the grant message via a bearer transport connection.

9. A method, as set forth in claim 8, wherein receiving the grant message via the bearer transport connection further comprises receiving the grant message as a short data burst.

10. A method, as set forth in claim 7, wherein initiating the reactivation of the dormant connection further comprises transmitting an origination message.
